# EUROPEAN PATENT APPLICATION

(11) **EP 1 117 029 A1**
(43) Date of publication of application: **18.07.2001**
(21) Application number: 01300133.4
(22) Date of filing: 08.01.2001
(51) Int. Cl.: G06F 3/14

(54) **Portable terminal and displaying information management method for portable terminal**

(30) Priority: 12.01.2000 JP 2000006275
(71) Applicant: SONY CORPORATION, Tokyo (JP)
(72) Inventor: Imura, Shigeru, Shinagawa-ku, Tokyo (JP)
(74) Representative: Nicholls, Michael John

(57) **Abstract**

A portable terminal includes an input operation section for being operated by a user of the portable terminal to input an operation input, a storage section for storing information to be displayed on a display screen, and a display control section for reading out information to be used to display on the display screen from the storage section in response to the operation input from the input operation section and controlling the display screen to display corresponding to the operation input based on the read out information. When loading of an external storage medium into the portable terminal is detected by a loading/unloading detection section for detecting loading/unloading of an external storage medium, authentication of the external storage medium is performed based on authentication information read out from the external storage medium. When the authentication results in success, data stored in the loaded external storage medium is read out. The stored contents of the storage section are rewritten with the read out data.

## Description

This invention relates to a portable terminal such as, for example, a portable telephone terminal or a personal digital assistant (PDA).

Miniaturization has proceeded with portable terminals such as small size portable terminals and digital cellular telephone sets so that they can be carried readily and conveniently. On the other hand, however, such portable terminals are progressively frequently used in various regions in which different languages are spoken, and the data amount of display fonts and the data amount of a vocabulary conversion dictionary are increasing gradually.

Use of a communication system which is used over a large number of countries such as, for example, the GSM (Global System for Mobile Communication) system allows easy and convenient telephoning to other countries through the use of a mobile telecommunication terminal such as a car phone communication terminal or a portable telephone communication terminal. For example, a portable telephone of the digital cellular system in Europe is regarded substantially as the world standards and is used in approximately 120 countries in the world.

Usually, a portable telephone terminal has a telephone directory function and other useful functions and includes a display screen such as a liquid crystal display screen so that necessary information may be displayed on the display screen.

Portable telephone terminals which are used in such a large number of countries as described above need include displaying fonts for use with languages which may be used by users of the telephone terminals and necessary control information of conversion dictionaries such as a kana-kanji conversion dictionary. In the following description, such displaying fonts and necessary control information are referred to collectively as displaying font and control information.

Therefore, a conventional portable telephone terminal generally has such a configuration that (1) a memory having a large capacity is used as a built-in memory and has displaying font and control information for a plurality of languages stored therein so that a user can selectively use the displaying font and control information for the necessary language.

However, a potable terminal is naturally limited in components thereof because it is formed in a small size and minimized in power consumption. Therefore, the built-in memory is limited in size and memory capacity. Therefore, such a countermeasure is taken that (2) different portable telephone terminals in each of which displaying font and control information of a language or languages estimated to be used with the portable telephone terminal is stored in the built-in memory are supplied to different language regions in which they are estimated to be used individually.

Again, a potable terminal is naturally limited in components thereof because it is formed in a small size and minimized in power consumption. Therefore, the built-in memory must store not only such displaying font and control information as described above but also operation programs for various functions.

In the conventional scheme (1) described above, the displaying font and control information includes a large amount of data even where one language is involved. Therefore, there is a problem that, where the portable telephone terminal is constructed for use with multiple languages in different countries, the memory area for operation programs necessary for original functions of the portable telephone terminal is suppressed.

Further, even if a memory of a sufficient large amount is used for the built-in memory, displaying font and control information for languages which are not usually used by the user of the portable telephone terminal may occupy, for example, 80% of the capacity of the built-in memory, which is uneconomical. Besides, a high cost is required for the built-in terminal and hence for the portable telephone terminal.

On the other hand, the countermeasure (2) described above is advantageous in that a memory of a small capacity can be used for the built-in memory. However, the portable telephone terminal of the countermeasure (2) is limited in number of languages of displaying font and control information which can be stored therein. Therefore, if it is tried to supply portable telephone terminals of the countermeasure (2) even of a single model all over the world, derivative or secondary models including built-in memories in which displaying font and control information for different languages is stored must be prepared. This results in increase of the cost of portable telephone terminals of the same model and hence in increase of the burden to the users.

It is an object of the present invention to provide a portable terminal which can be ready for displaying fonts of various languages using a built-in memory of a comparatively small capacity without an increase of the production cost and without the necessity for provision of secondary or derivative models upon manufacture.

In order to attain the object described above, according to an aspect of the present invention, there is provided a portable terminal, comprising display means having a display screen, input operation means for being operated by a user of the portable terminal to input an operation input, storage means for storing information to be displayed on the display screen, display control means for reading out information to be used to display on the display screen from the storage means in response to the operation input from the input operation means and controlling the display means to make a display corresponding to the operation input on the display screen based on the read out information, loading/unloading detection means for detecting loading or unloading of an external storage medium into or from the portable terminal, authentication means operable when loading of an external storage medium is detected by the loading/unloading detection means for authenticating the external storage medium based on authentication information read out from the external storage medium, readout means operable when the authentication by the authentication means results in success for reading out data stored in the loaded external storage medium, and write means for writing the data read out by the readout means into the storage means.

According to another aspect of the present invention, there is provided a displaying information management method for a portable terminal for managing stored information of storage means of the portable terminal such that information to be used to display on a display screen is read out from the storage means in response to an operation input through input operation means and display is made on the display screen based on the read out information in response to the operation input, comprising a preparation step of preparing an external storage medium in which a plurality of pieces of information are stored as information to be displayed on the display screen, an authentication step of authenticating, when loading of the external storage medium is detected by the portable terminal, the external storage medium based on authentication information read out from the external storage medium, a readout step of reading out, when the authentication in the authentication step results in success, data stored in the loaded external storage medium, and a write step of writing the data read out in the readout step into the storage means.

With the portable terminal and the displaying information management method for a portable terminal, when an external storage medium is loaded into the portable terminal body, it is authenticated typically whether or not the external storage medium corresponds in a one-by-one corresponding relationship to the portable terminal body. Then, if it is authenticated as a result of the authentication that the external storage medium corresponds in a one-by-one corresponding relationship to the portable terminal body, then data is read out from the external storage medium and stored contents of the storage means of the portable terminal body is rewritten with the data.

Accordingly, even where data which is under the protection of a copyright such as a displaying font is recorded in the external storage medium, the data recorded on the external storage medium can be written into a built-in memory of the portable terminal while preventing illegal use of the external recording medium. Consequently, even if, for example, displaying font and control information is not written into the built-in memory of the portable terminal in advance, a displaying font to be utilized by a user can be read out from the external storage medium for the terminal for the user and written into the built-in memory so that it can be used later.

The invention will be further described by way of example with reference to the accompanying drawings in which like parts or elements denoted by like reference symbols and in which:-
FIG. 1 is a flow chart illustrating operation of a portable terminal to which the present invention is applied;
FIG. 2 is a schematic view illustrating a communication network to which the portable terminal is applied;
FIG. 3 is a block diagram of an example of a construction of the portable terminal;
FIG. 4 is a block diagram of an example of a construction of a card-type memory which is used with the portable terminal;
FIG. 5 is a table illustrating data stored in the card-type memory;
FIGS. 6A and 6A are block diagrams illustrating a font storage area provided the portable terminal; and
FIG. 7 is a flow chart illustrating registration inputting operation of telephone directory data by the portable terminal.

In the following, a portable terminal to which the present invention is applied is described. In the embodiment described below, the present invention is applied to a portable telephone terminal which is used in a communication network system in which the GSM system which is a communication system used in more than 100 countries is used.

### [Communication System of the GSM System]

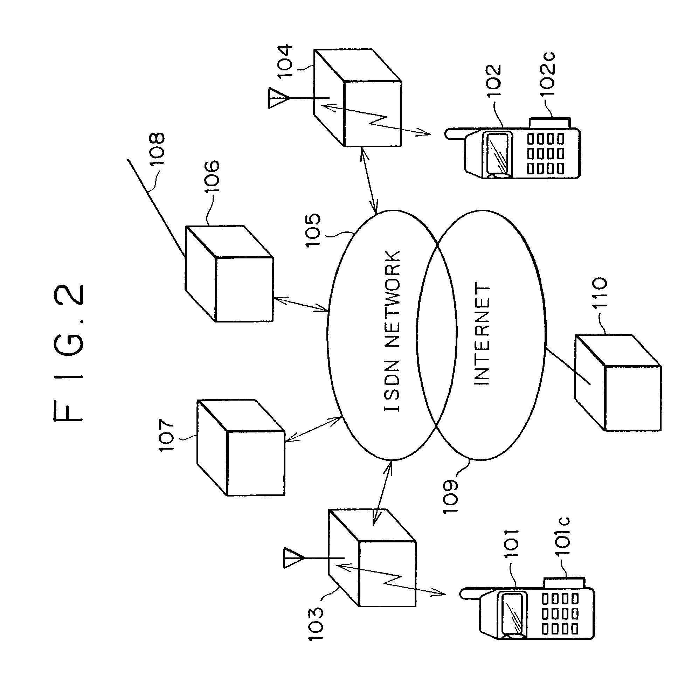

FIG. 2 shows the communication network system in which the GSM system is used. Referring to FIG. 2, a pair of portable telephone terminals 101 and 102 shown are ready for a communication system (digital cellular system) of the GSM system. The portable telephone terminals 101 and 102 perform position registration into a repeating center (authentication center) 107 provided in the communication system of the GSM system through the nearest portable telephone base stations (hereinafter referred to simply as base stations) 103 and 104, respectively.

When a position registration request is issued to the repeating center 107 from a portable telephone terminal which can be connected to the communication system of the GSM system such as the portable telephone terminal 101 or 102, the repeating center 107 allocates an international subscriber number to the portable telephone terminal of the source of the position registration request in response to the position registration request. The repeating center 107 manages the international subscriber number, a subscriber telephone number allocated to the portable telephone terminal and terminal position information in a coordinated relationship. Usually, a repeating center such as the repeating center 107 is provided for each state.

When the portable telephone terminal 101 originates a call, it connects a channel to the nearest base station 103 by radio communication. When the telephone communication terminal of the terminating destination of the call then is, for example, the portable telephone terminal 102, the base station 103 issues an inquiry for terminal position information (current position information) of the portable telephone terminal 102 of the call terminating object to the repeating center 107 described above through an ISDN network 105.

Since any portable telephone terminal which can be connected to the communication system of the GSM system has its position and so forth registered in the repeating center 107 as described above, the position of the portable telephone terminal 102 of the call terminating object is specified based on a response from the repeating center 107. Then, a communication circuit is connected between the portable telephone terminal 101 and the portable telephone terminal 102 of the call terminating object through the base station 103, the ISDN network 105 and the base station 104 which repeats a radio wave of the portable telephone terminal 102 of the call terminating object thereby to allow communication.

On the other hand, when a call originated from the portable telephone terminal 101 is destined for a wired telephone terminal connected to the communication system of the present embodiment through a public switched telephone network (PSTN) station 106 and a telephone network 108, a communication circuit is connected between the portable telephone terminal 101 and the object wired telephone terminal through the base station 103, ISDN network 105 and PSTN station 106. Consequently, communication between the portable telephone terminal 101 and the object wired telephone terminal is allowed.

It is to be noted that discrimination of whether the telephone communication terminal of the call terminating object is a portable telephone terminal which can be connected to the communication network of the GSM system or a telephone communication terminal such as a wired telephone terminal other than the portable telephone terminal can be performed by a base station or a PSTN station based on a symbol or a numeral at a predetermined column position of input information such as a subscriber telephone number of the telephone communication terminal of the call terminating object inputted to the telephone communication terminal of the call originating source. The discrimination is sometimes based on a plurality of pieces of input information.

An Internet service provider 110 is connected to the portable telephone base stations 103 and 104 through the Internet 109 and an ISDN network 105. Consequently, the portable telephone terminals 101 and 102 can enjoy various services from the service provider 110 through the portable telephone base stations 103 and 104 in accordance with contracts with the service provider 110. The services may include, for example, downloading of data in order to update data (version up), provision of information and so forth.

### [Portable Telephone Terminal]

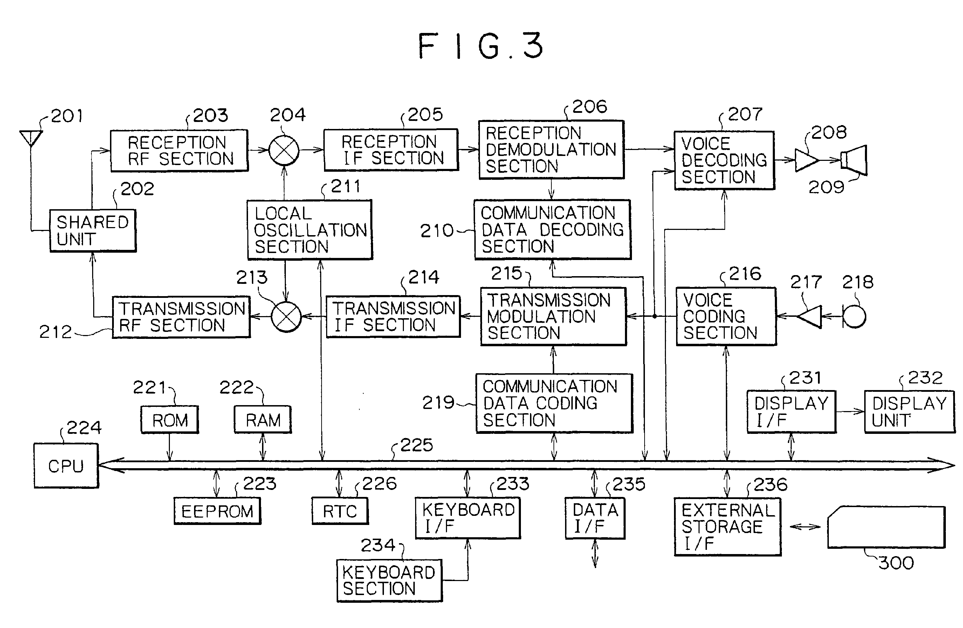

Now, a portable telephone terminal used in the communication system of the present embodiment is described. FIG. 3 shows an example of a configuration of a portable telephone terminal of the present embodiment such as the portable telephone terminal 101 or 102 shown in FIG. 2. The portable telephone terminal of the present embodiment has a configuration substantially similar to that of an ordinary digital cellular portable telephone terminal.

A reception signal received through an antenna 201 is supplied to a reception RF section 203 through an antenna shared unit 202. The reception RF section 203 performs such necessary processing as bandwidth limitation and AGC (Automatic Gain Control) so that the received reception signal may have an appropriate level, and supplies a resulting signal to a mixer 204.

The mixer 204 mixes a local oscillation signal from a local oscillation section 211 having a controlled frequency and an output signal of the reception RF section 203 with each other in order to convert the reception frequency of the reception signal into a fixed frequency. An output signal of the mixer 204 is supplied to a reception IF section 205. The reception IF section 205 performs A/D (Analog to Digital) conversion of the signal supplied thereto to form I, Q digital data having a fixed bit rate. The I, Q digital data is supplied to a reception demodulation section 206.

The reception demodulation section 206 performs elimination of influences such as fading, discrimination of the type of the received signal, deinterleaving and error correction for the I, Q digital data supplied thereto and then performs suitable decoding to demultiplex voice data and the other communication data from each other.

Of the data obtained by the demultiplexing, the voice data is supplied to a voice decoding section 207. Since voice data is normally transmitted in a block of compressed data of a predetermined data length, the voice decoding section 207 decompresses and decodes the compressed voice data supplied thereto and then performs D/A (Digital to Analog) conversion of the decompressed decoded voice data in accordance with a sampling rate for voice. Then, the analog voice signal obtained by the D/A conversion is power amplified by a speaker amplifier 208 and then supplied to a speaker 209. Consequently, voice is emitted in accordance with the analog voice signal from the speaker 209.

On the other hand, the communication data of the data obtained by the demultiplexing described above is supplied from the reception demodulation section 206 to the communication data decoding section 210, by which it is decoded back into final original data. The decoded communication data is transmitted typically over a CPU bus 225 through a data interface (represented as data I/F in FIG. 3) 235 to an external apparatus or the like.

Subsequently, a transmission system is described. A microphone 218 collects voice and converts the collected voice into an analog voice signal. The microphone 218 supplies the analog voice signal to a microphone amplifier 217. Since the output power of the microphone 218 is low, the microphone amplifier 217 amplifies the analog voice signal supplied thereto to a necessary voltage. The amplified analog voice signal is supplied to a voice coding section 216.

The voice coding section 216 performs A/D conversion of the analog voice signal supplied thereto at a suitable sampling rate to obtain a digital voice signal. Then, the voice coding section 216 codes and compresses the digital voice signal in accordance with a predetermined coding method and arranges the coded compressed voice signal into blocks suitable for a burst signal of a transmission RF signal.

Meanwhile, digital data inputted from an external apparatus through the data interface 235 is arranged into suitable blocks by a communication data coding section 219. Data from the voice coding section 216 and the communication data coding section 219 are converted into I, Q digital data having a fixed data rate by a transmission modulation section 215.

The I, Q digital data are converted into an analog modulation signal by D/A conversion by a transmission IF section 214 and then mixed with a signal for conversion from the local oscillation section 211 by a mixer 213 so that the analog modulation signal may be converted into a signal of a desired transmission frequency. The resulting signal of the desired frequency from the mixer 213 is power amplified by a transmission RF section 212 so as to have a necessary transmission power and is then radiated (transmitted) from the antenna 201 through the antenna shared unit 202.

It is to be noted that, in the portable telephone terminal of the present embodiment, a voice signal from the microphone 218 is sent back from the voice coding section 216 to the voice decoding section 207. Consequently, the voice signal from the microphone 218 is mixed with a voice signal of the receiving party, converted into an analog voice signal by a D/A converter of the voice decoding section 207 and emitted as voice from the speaker 209. In other words, part of the voice of the talking party can be heard from the speaker 209.

This is called talker side tone and is used to prevent or moderate such a situation that, because a receiver portion of the portable telephone terminal covers an ear of the talker to decrease the magnitude of the uttered voice of the talker which is heard by the talker himself, the talker talks with voice of an increasing magnitude intending to compensate for the decreased magnitude of the uttered voice unconsciously.

A control section 220 for controlling the entire portable telephone terminal is formed from a CPU (Central Processing Unit) 224, a ROM (Read Only Memory) 221, a RAM (Random Access Memory) 222, an EEPROM (Electrically erasable and programmable ROM) 223, and a RTC (Real Time Clock; clock circuit) 226 connected to each other by a CPU bus 225.

The ROM 221 has stored therein in advance programs to be executed by the CPU 224 and necessary data such as a displaying font. The RAM 222 is used principally as a working area and is used to store data in the course of calculation during execution of a program by the CPU 224 when necessary. The RAM 222 is further used to temporarily store data communicated between the control section 220 and components of the reception system or the transmission system of the portable telephone terminal.

The EEPROM 223 is a read only memory used to store setting conditions as setting parameters typically immediately before power supply to the portable telephone terminal is disconnected so that, when power supply to the portable telephone terminal is connected subsequently, the portable telephone terminal may be set to the same setting conditions. In the present embodiment, optional displaying font and control information, telephone directory data, telephone directory font information and other necessary data are stored also into the EEPROM 223.

The RTC 226 counts time and thus provides time data, that is, data of the year, month, day and hour. The RTC 226 is used, for example, for a time stamp of data or the like, a time display of the portable telephone terminal, and an alarm.

The portable telephone terminal of the present embodiment further includes a display interface (represented as display I/F in FIG. 3) 231, a keyboard interface (represented as keyboard I/F in FIG. 3) 233 and an external storage interface (represented as external storage I/F in FIG. 3) 236 all connected to the CPU bus 225 of the control section 220.

Display data from the control section 220 is supplied to a display unit 232 through the display I/F 231. A keyboard section 234 includes ten keys and various function keys, and input data from a user inputted through the keyboard section 234 is supplied to the control section 220 through the keyboard I/F 233.

An external storage interface 236 allows communication of data between an external storage medium such as a card-type memory and the control section 220. Typically, the external storage interface 236 is an interface when data from a card-type memory is used by the body of the portable telephone terminal or when data acquired by downloading from the service provider 110 described above is stored into a card-type memory 300.

The card-type memory 300 is provided to the user by a manufacturer of the portable telephone terminal or the service provider 110. Such card-type memory 300 is provided such that one card-type memory corresponds to one portable telephone terminal. This is intended to prevent, where information stored in the card-type memory 300 is under the protection of the copyright, the information from being used illegally through another portable telephone terminal.

To this end, typically number information or like information which corresponds to a portable telephone terminal in a one-by-one corresponding relationship such as, for example, a number same as the machine number of the portable telephone terminal is registered into the card-type memory 300 and used as verification information as hereinafter described.

### [Card-Type Memory]

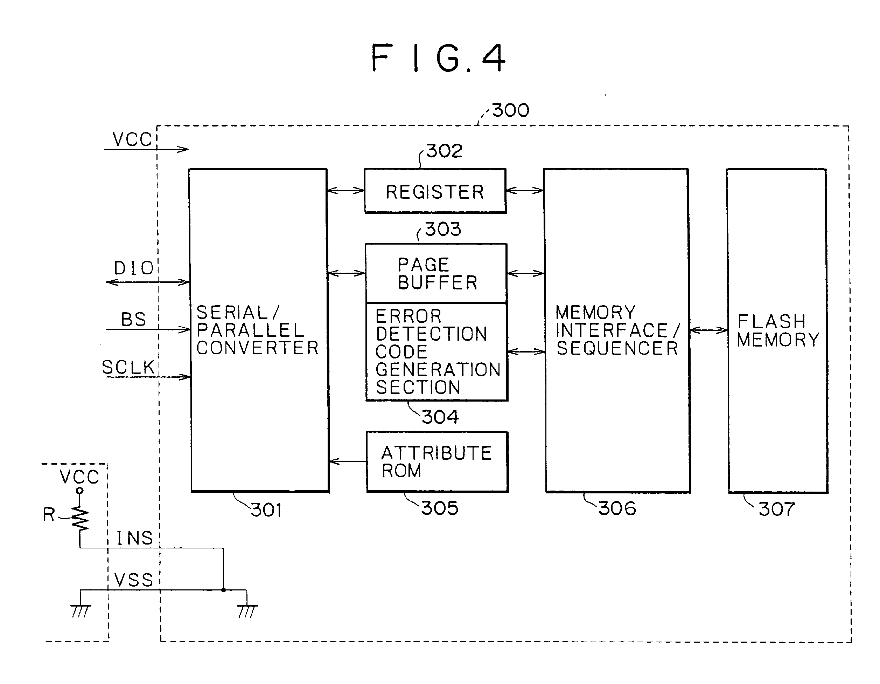

FIG. 4 shows an internal structure of a form of the card-type memory 300 connected to the external storage interface 236.

Referring to FIG. 4, the card-type memory 300 uses an operating power supply VCC of, for example, 2.7 to 3.6 V for its operation. The power supply voltage of the operating power supply VCC is supplied from the portable telephone terminal side through the external storage interface 236.

A bidirectional data signal DIO communicated through the external storage interface 236 is used to write or read out control data called TPC (Transfer Protocol Command) and data itself.

A bus state BS indicates a status for the data on the bidirectional data signal DIO and is used to change the state with a TPC or data itself, for example, before data accessing is performed to execute processing of the card-type memory 300.

A transfer clock SCLK is generated when a TPC or data itself is to be transferred. The transfer clock SCLK is controlled with the bus state BS.

A loading/unloading detection signal INS is used to allow the external apparatus (here the portable telephone terminal) into which the card-type memory 300 is to be loaded to detect a loaded state of the card-type memory 300. One end of the signal line for the loading/unloading detection signal INS is connected to the ground VSS in the inside of the card-type memory 300 as seen in FIG. 4. The other end of the signal line of the loading/unloading detection signal INS is connected to an in-apparatus power supply through a pull-up register R as seen in FIG. 4 in the inside of the external apparatus in which the card-type memory 300 is loaded. The signal line for the ground VSS is connected to the ground in the external apparatus in which the card-type memory 300 is loaded.

Accordingly, where the card-type memory 300 is loaded in the external apparatus such as the portable telephone terminal, the loading/unloading detection signal INS exhibits the low level, but where the card-type memory 300 is not loaded, the loading/unloading detection signal INS exhibits the high level.

The card-type memory 300 includes, in the inside thereof, a serial/parallel converter 301, a register 302, a page buffer 303, an error detection code generation section 304, an attribute ROM 305, a memory interface/sequencer 306, and a flash memory 307 which is an electrically rewritable non-volatile memory.

Upon writing, the serial/parallel converter 301 converts serial data sent thereto with the bidirectional data signal DIO in synchronism with the transfer clock SCLK into parallel data of, for example, 8 bits. Not only a controlling command but also data are converted from serial data into parallel data by the serial/parallel converter 301. Upon reading out, the serial/parallel converter 301 converts parallel data of 8 bits stored in the card-type memory 300 into serial data and outputs the serial data as a bidirectional data signal DIO to the external apparatus, that is, the potable telephone terminal here.

The register 302 includes a status register, a parameter register, an extra data register and so forth and performs access control of the flash memory 307 in the card-type memory 300 using the TPC.

The page buffer 303 is used to temporarily store data when data exchanging is performed between the serial/parallel converter 301 and the flash memory 307.

The error detection code generation section 304 on one hand adds error detection codes such as, for example, CRC codes to data to be transferred to the external apparatus and on the other hand performs error detection with such CRC codes added to data transferred thereto from the external apparatus to secure the reliability of the data.

The attribute ROM 305 has physical information of the inside of the card-type memory 300 stored therein. Immediately after power supply to the card-type memory 300 is made available, the external apparatus reads out the information to check the situation of the card-type memory 300.

The memory interface/sequencer 306 controls data to be communicated between the page buffer 303 and the flash memory 307 based on parameters and so forth set in the register 302. Data finally delimited into pages of, for example, a certain capacity are stored in the flash memory 307.

In the card-type memory 300 described above, displaying fonts for various languages and necessary control information such as a conversion dictionary which may be demanded to use by users of different countries are stored corresponding to the individual languages in the flash memory 307. As hereinafter described, stored contents of the flash memory 307 are enabled to read out when authentication is performed successfully using a verification code.

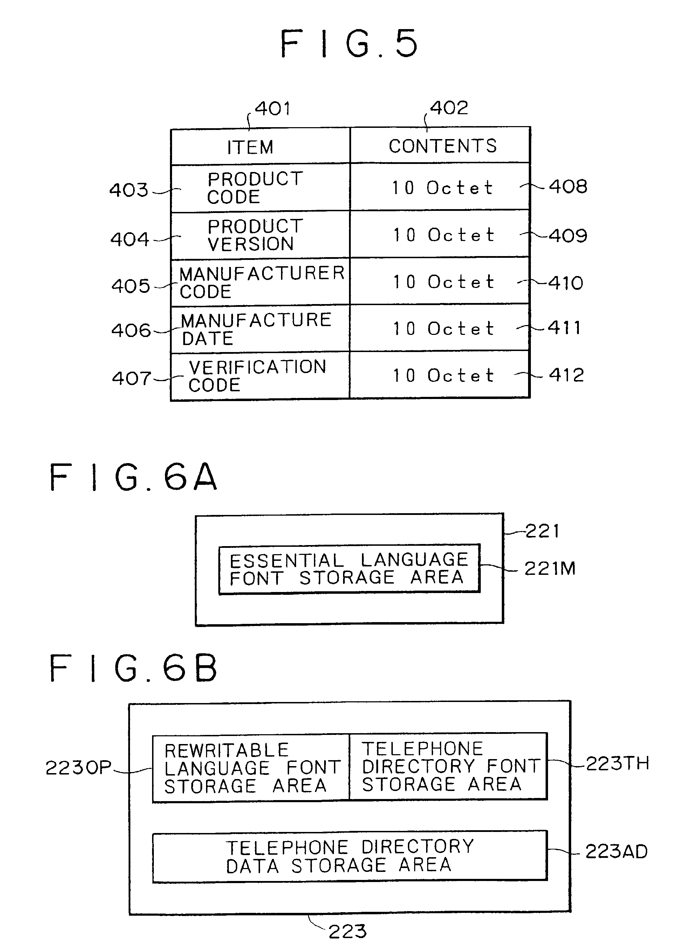

Information to be stored in the card-type memory 300 in addition to information of the fonts described above is described in connection with an example of coding illustrated in FIG. 5.

An item 401 is a description item, for example, of a file stored in the card-type memory 300, and contents 402 indicate individual code sizes. A product code 403 is a number unique to a product managed by its manufacturer and is represented by a numeral 408 of 10 figures or less. A product version 404 represents a version unique to a product managed by its manufacturer and is a consecutive number which is changed in accordance with a predetermined rule each time the product is improved and issued formally. The product version 404 is represented by a numeral 409 of 10 figures or less.

A manufacturer code 405 is a management code for specifying a manufacturer and may be, for example, a combination of a manufacturer company number, a state number of the manufacturer, a manufacturing factory number and so forth. The manufacturer code 405 is represented by a numeral 410 of 10 figures or less.

A manufacturer date 406 is updated when data, an application or the like stored in the card-type memory 300 is issued newly by its manufacturer or when a user later downloads such data or application in order to update it from a service provider. Also the manufacturer date 406 is represented by a numeral 411 of 10 figures or less. All of the coded data described above are stored at a predetermined position as part of the data or application in a portion of the card-type memory 300 in which data and applications are usually stored.

A verification code 407 is a code encrypted with a numeral 412 represented with 10 figures or less and stored in a portion of the card-type memory 300 from which any user cannot normally be read out. The verification code 407 is decoded by the portable telephone terminal body which is the external apparatus and is subject to a verification operation with a code in the terminal body. Only when coincidence is detected by the verification operation, use of the card-type memory 300 is permitted.

In the portable telephone terminal of the present embodiment, displaying fonts are stored in a ROM 221 and an EEPROM 223. Referring to FIG. 6A, the ROM 221 has an essential language font storage area 221M provided therein. The essential language font storage area 221M has stored therein an essential displaying font or fonts which can be used commonly by all portable telephone terminals.

More particularly, a font for a language which is, for example, considered to be used most frequently in the world and necessary control information such as a conversion dictionary are stored in the essential language font storage area 221M. Typically, a font of alphabets and necessary control information are stored in the essential language font storage area 221M.

The EEPROM 223 has, as shown in FIG. 6B, a rewritable language font storage area 2230P and a telephone directory font storage area 223TH prepared as displaying font recording areas provided therein. The EEPROM 223 further has a telephone directory data storage area 223AD provided therein.

The rewritable language font storage area 2230P has stored therein fonts of languages which can be selectively set by the user and necessary control information such as a conversion dictionary. As described hereinabove, font and control information for languages to be used by the user is stored in the card-type memory 300, and when authentication results in success, the font and control information selectively read out from the card-type memory 300 by the user is stored into the rewritable language font storage area 2230P.

The telephone directory font storage area 223TH has stored therein font and control information for displaying of characters of names, memoranda and so forth registered as telephone directory data and stored in the telephone directory data storage area 223AD. This is intended to allow the names and other information registered as the telephone directory data to be displayed at any time even if information of the fonts of the rewritable language font storage area 223OP is rewritten suitably by the user.

It is to be noted that a font stored in the essential language font storage area 221M need not be stored in the telephone directory font storage area 223TH, and therefore, only when a font of a name and so forth upon registration is one of the fonts stored in the rewritable language font storage area 2230P, it is stored into the telephone directory font storage area 223TH. [Rewriting of the Rewritable Language Font Storage Area 2230P]

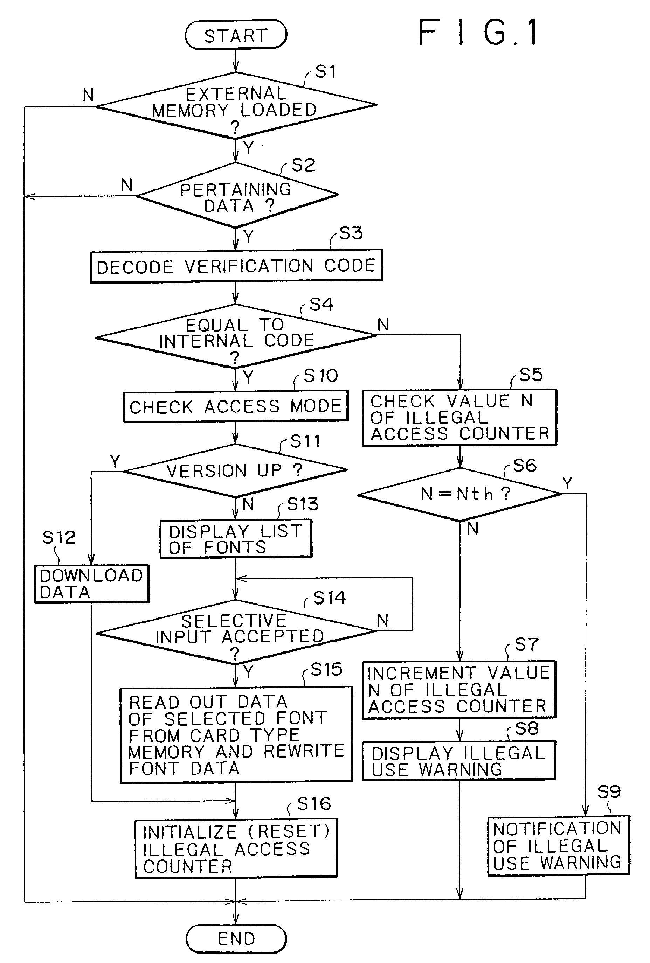

FIG. 1 is a flow chart of a process of the portable telephone terminal when it has the card-type memory 300 loaded therein. The process illustrated in FIG. 1 includes a rewriting process for the rewritable language font storage area 2230P of the portable telephone terminal with information read out from the card-type memory 300 and an updating process of stored information of the card-type memory 300. The process of FIG. 1 is described below.

First, the loading/unloading detection signal INS is checked to discriminate whether or not the card-type memory 300 is loaded in the portable telephone terminal body (step S1). If the card-type memory 300 is not loaded, then the processing is ended immediately.

On the contrary, if it is discriminated that the card-type memory 300 is loaded, then it is discriminated whether or not contents requested by the user are stored in the card-type memory 300 (step S2). In particular, before or after the card-type memory 300 is loaded into the portable telephone terminal body, the user uses the keyboard section 234 of the portable telephone terminal to designate a function such as font rewriting. Therefore, the portable telephone terminal confirms what information is stored in the card-type memory 300 to discriminate whether or not the card-type memory 300 is a card type memory in which the information designated by the user is stored.

If it is discriminated in step S2 that the loaded card-type memory 300 does not have the pertaining data stored therein, then the processing is ended immediately.

On the other hand, if it is discriminated that the card-type memory 300 loaded has the pertaining data stored therein, then the portable telephone terminal acquires and decodes the encrypted verification code 407 (FIG. 5) stored in the card-type memory 300 in order to confirm whether or not the card-type memory 300 loaded is a legal card-type memory to the portable telephone terminal (Step S3).

Then, the portable telephone terminal verifies the resulting verification code with an internal code set in advance therein (step S4). Here, if it is discriminated that the verification code does not coincide with the internal code, then the portable telephone terminal checks a value N of an illegal access counter which is provided in the portable telephone terminal for supervising an illegal access (step S5). Then, the portable telephone terminal discriminates whether or not the value N of the illegal access counter is equal to a limit value Nth set in advance (step S6).

If the value N of the illegal access counter is equal to the limit value Nth of the illegal access counter set in advance, then the portable telephone terminal determines that accessing thereto with a bad faith has been performed repetitively and issues an illegal use warning notification to a manufacturer or a destination determined in advance such as a service provider (step S9). After the notification is originated, the processing is ended. The notification includes identification information of the portable terminal. This allows specification of a portable terminal by which the illegal action has been performed and allows a countermeasure to be taken such as to prohibit the use of the portable terminal.

On the other hand, if it is discriminated in the discrimination step S6 whether or not the value N of the illegal access counter is equal to the limit value Nth set in advance that it does not reach the limit value Nth, then the portable telephone terminal increments the value N of the illegal access counter as a record of the illegal accessing (step S7). Then, in order to give a warning to the user, the portable telephone terminal displays an illegal use warning on the display unit 232 and emits warning sound (step S8), thereby ending the processing.

On the other hand, if coincidence is discriminated in the internal code coincidence discrimination in step S4 and consequently the authentication results in success, then the portable telephone terminal checks the access mode designated by the user (step S10). Then, it is discriminated based on a result of the check of the access mode whether the access mode designated is a mode for downloading data of a new version from the service provider into the card-type memory 300 (step S11). If the access mode is the mode for downloading data, then the portable telephone terminal executes downloading for the version up (step S12). Then, the portable telephone terminal resets the illegal access counter to zero (step S16) and then ends the processing.

The downloading for the version up is executed by a software program for downloading for the version up registered in the portable telephone terminal in advance. In particular, the portable telephone terminal automatically originates a call (dial sign up) to the service provider and issues a request for downloading for the version up. Then, the portable telephone terminal transfers data acquired from the service provider to the card-type memory 300. The card-type memory 300 thus updates the contents of the flash memory 307 with the received data to perform the version up.

On the other hand, if it is discriminated in step S11 that the access mode designated is a mode for writing an optional font to be used by the user from within data of fonts stored in the card-type memory 300 into the portable telephone terminal, then the portable telephone terminal displays a list of the fonts for languages stored in the card-type memory 300 on the display unit 232 based on the information acquired from the card-type memory 300 to urge the user to select an optional displaying font (step S13).

Then, the portable telephone terminal accepts a selective input of the user who refers to the display screen (step S14), and reads out data of the selected font and so forth from the card-type memory 300 and rewrites the stored contents of the rewritable language font storage area 2230P with the thus read out font data (step S15). Then, the portable telephone terminal resets the value N of the illegal access counter to zero (step S16) and then ends the processing.

### [Registration of Telephone Directory Data]

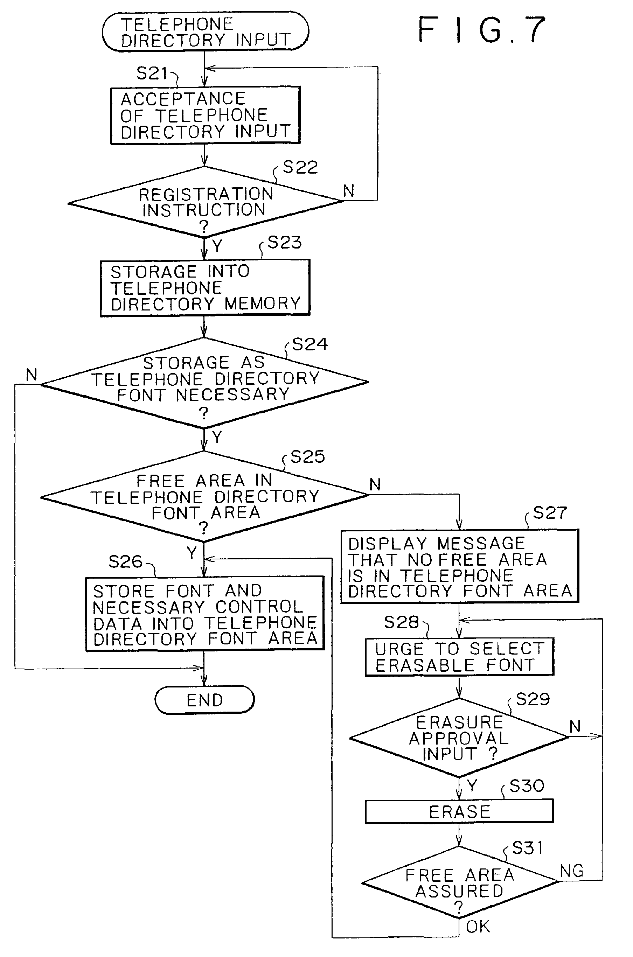

Now, a registration process of telephone directory data by the portable telephone terminal of the present embodiment is described with reference to FIG. 7. In the present embodiment, in response to writing registration of telephone directory data into the telephone directory data storage area 223AD, data of a font or the like are written into the telephone directory font storage area 223TH when necessary.

First, the portable telephone terminal accepts a telephone directory input (step S21). Then, if it is confirmed that a registration instruction is received (step S22), then the portable telephone terminal stores the name or the like and the telephone number inputted into the telephone directory data storage area 223AD of the EEPROM 223 (step S23).

Then, the portable telephone terminal discriminates whether or not it is necessary to store a font of the name or the like inputted as a telephone directory font (step S24). When the font of the newly inputted characters and so forth is recorded in the essential language font storage area 221M or is stored already in the telephone directory font storage area 223TH, it is not necessary to store the font, and therefore, the processing is ended.

However, if it is discriminated in step S24 that the font of the newly inputted characters and so forth is not stored in the essential language font storage area 221M and is stored in the rewritable language font storage area 2230P but not stored in the telephone directory font storage area 223TH as yet, then the portable telephone terminal discriminates whether or not the telephone directory font storage area 223TH has a free area (step S25).

If the telephone directory font storage area 223TH has a free area, then the portable telephone terminal stores the font and necessary control data such as a conversion dictionary into the telephone directory font storage area 223TH (step S26). Then, the processing is ended.

If it is discriminated in step S25 that the telephone directory font storage area 223TH does not have a free area, then the portable telephone terminal displays on the display unit 232 a display representing that the telephone directory font storage area 223TH does not have a free area (step S27). Then, the portable telephone terminal displays font and control data stored in the telephone directory font storage area 223TH successively or in a unit of a plurality of data on the display unit 232 to urge the user to select a font which can be erased (step S28).

Then, the portable telephone terminal confirms an erasure approval input by the user in response to the display on the display screen (step S29) and, if the erasure approval input is confirmed, the portable telephone terminal erases the font (step S30). Then, the portable telephone terminal confirms assurance of a free area of the telephone directory font storage area 223TH (step S31). Then, the portable telephone terminal stores the new font and the necessary control data such as a conversion dictionary into the thus assured memory area of the telephone directory font storage area 223TH (step S26). Then, the processing is ended.

In the present embodiment, a font which is of characters and so forth registered in the telephone directory but is not included in the essential language font storage area 221M is stored into the telephone directory font storage area 223TH in such a manner as described above. Therefore, even when font and control data of the rewritable language font storage area 2230P is rewritten, a registered name, memorandum and so forth are displayed correctly in the telephone directory mode.

A font or a dictionary which involves copyright must be protected by the copyright. Thus, in the present embodiment, since an external storage medium such as a card-type memory to be used with a portable telephone terminal is used in a one-by-one corresponding relationship to a terminal and is enabled for use only when authentication results in success, the use of the card-type memory with another portable terminal can be disabled.

It is to be noted that, while the embodiment described above relates to a portable telephone terminal, naturally the portable terminal to which the present invention can be applied is not limited to the portable telephone terminal. Further, the portable terminal need not necessarily have the communication function. Also where the version up of stored data of the card-type memory is performed through the Internet, a communication adapter may be connected to the portable terminal.

Further, naturally the external storage medium is not limited to a card-type memory.

While a preferred embodiment of the present invention has been described using specific terms, such description is for illustrative purposes only, and it is to be understood that changes and variations may be made without departing from the spirit or scope of the following claims.

## Claims

1. A portable terminal, comprising:
display means having a display screen;
input operation means for being operated by a user of said portable terminal to input an operation input;
storage means for storing information to be displayed on said display screen;
display control means for reading out information to be used to display on said display screen from said storage means in response to the operation input from said input operation means and controlling said display means to make a display corresponding to the operation input on said display screen based on the read out information;
loading/unloading detection means for detecting loading or unloading of an external storage medium into or from said portable terminal;
authentication means operable when loading of an external storage medium is detected by said loading/unloading detection means for authenticating the external storage medium based on authentication information read out from the external storage medium;
readout means operable when the authentication by said authentication means results in success for reading out data stored in the loaded external storage medium; and
write means for writing the data read out by said readout means into said storage means.

2. A portable terminal according to claim 1, wherein the information stored into said storage means includes at least information of a displaying font corresponding to a used language and the external storage medium has at least information of displaying fonts of a plurality of languages stored therein, said portable terminal further comprising notification means operable when the authentication by said authentication means results in success for notifying the user of the plurality of languages with regard to which the information of displaying fonts is stored in the external storage medium and selective input acceptance means for accepting a selective input of the user from among the plurality of languages of which the user is notified by said notification means, said readout means reading out the information of the displaying font of the language designated by the selective input accepted by said selective input acceptance means from the external storage medium, said write means writing the read out information of the displaying font into a storage area set in advance of said storage means.

3. A portable terminal according to claim 2, wherein said storage means has an essential language font storage area and a rewritable language font storage area prepared therein, and the information of the displaying font read out from the external storage medium is written into said rewritable language font storage area.

4. A portable terminal according to claim 1, 2 or 3 further comprising warning means for issuing a warning when the authentication by said authentication means results in failure.

5. A portable terminal according to claim 1, 2, 3 or 4 further comprising radio communication means, and reporting means operable when the authentication by said authentication means results in failure successively by a number of times determined in advance for reporting the failure of the authentication to a reporting destination set in advance through said radio communication means.

6. A portable terminal according to claim 1, 2, 3, 4 or 5 wherein said portable terminal is a portable communication terminal and further comprises updating means operable when the authentication of the loaded external storage medium by said authentication means results in success for updating the stored contents of the external storage medium with updating information acquired over a communication circuit.

7. A portable terminal according to claim 2 or any claim dependent therefrom wherein said portable terminal is a portable telephone terminal and further comprises means for storing a telephone directory in which destination subscribers and telephone numbers are stored in a corresponding relationship and said storage means further includes a telephone directory font storage area for independently storing information of fonts for the destination subscribers registered in said telephone directory, and said write means writes the information of the displaying fonts read out by said readout means into a storage area of said storage means set as an area other than said telephone directory font storage area.

8. A portable terminal according to claim 3 or any claim dependent therefrom, further comprising means for storing a telephone directory in which destination subscribers and telephone numbers are stored in a corresponding relationship, and wherein said storage means further includes a telephone directory font storage area, and said write means stores only information of the fonts stored in said rewritable language font storage area of said storage means within the information of the fonts of the destination subscribers registered in said telephone directory into said telephone directory font storage area.

9. A portable terminal according to claim 7 or 8, further comprising means for urging the user to select an unnecessary font when said telephone directory font storage area has no free storage capacity any more, and means for writing information of a font to be used newly into an area of said telephone directory font storage area for the unnecessary font designated with an unnecessary font selection instruction by the user.

10. A portable terminal according to any one of the preceding claims, wherein the external storage medium and said portable terminal have a one-by-one verification code, and said authentication means verifies the verification codes of said portable terminal and an external storage medium loaded in said portable terminal.

11. A displaying information management method for a portable terminal for managing stored information of storage means of said portable terminal such that information to be used to display on a display screen is read out from said storage means in response to an operation input through input operation means and display is made on said display screen based on the read out information in response to the operation input, comprising:
a preparation step of preparing an external storage medium in which a plurality of pieces of information are stored as information to be displayed on said display screen;
an authentication step of authenticating, when loading of the external storage medium is detected by said portable terminal, the external storage medium based on authentication information read out from the external storage medium;
a readout step of reading out, when the authentication in the authentication step results in success, data stored in the loaded external storage medium; and
a write step of writing the data read out in the readout step into said storage means.

12. A displaying information management method according to claim 11, wherein the information stored into said storage means includes at least information of a displaying font corresponding to a used language and the external storage medium has at least information of displaying fonts of a plurality of languages stored therein, the displaying information management method further comprising a notification step of notifying, when the authentication in the authentication step results in success, a user of said portable terminal of the plurality of languages with regard to which the information of displaying fonts is stored in the external storage medium and a selective input acceptance step of accepting a selective input of the user from the plurality of languages of which the user is notified in the notification step, in the readout step the information of the displaying font of the language designated by the selective input accepted in the selective input acceptance step being read out from the external storage medium, in the write step the read out information of the displaying font being written into a storage area set in advance of said storage means.

13. A displaying information management method according to claim 12, wherein said storage means has an essential language font storage area and a rewritable language font storage area prepared therein, and the information of the displaying font read out from the external storage medium is written into said rewritable language font storage area.

14. A displaying information management method according to claim 11, 12 or 13 further comprising a warning step of issuing a warning when the authentication in the authentication step results in failure.

15. A displaying information management method according to claim 11, 12, 13 or 14 wherein said portable terminal further includes radio communication means, and said displaying information management method further comprises a reporting step of reporting, when the authentication in the authentication step results in failure successively by a number of times determined in advance, the failure of the authentication to a reporting destination set in advance through said radio communication means.

16. A displaying information management method according to claim 11, 12, 13, 14 or 15 wherein said portable terminal is a portable communication terminal, and said displaying information management method further comprises an updating step of updating, when the authentication of the loaded external storage medium in the authentication step results in success, the stored contents of the external storage medium with updating information acquired over a communication circuit.

17. A displaying information management method according to claim 12 or any claim dependent thereon, wherein said portable terminal is a portable telephone terminal and further includes means for storing a telephone directory in which destination subscribers and telephone numbers are stored in a corresponding relationship and said storage means further includes a telephone directory font storage area for independently storing information of fonts for the destination subscribers registered in said telephone directory, in the write step the information of the displaying fonts read out in the readout step being written into a storage area of said storage means set as an area other than said telephone directory font storage area.

18. A displaying information management method according to claim 14 or any claim dependent thereon, wherein said portable terminal further includes means for storing a telephone directory in which destination subscribers and telephone numbers are stored in a corresponding relationship and said storage means further includes a telephone directory font storage area, in the write step only information of the fonts stored in said rewritable language font storage area of said storage means within the information of the fonts of the destination subscribers registered in said telephone directory being stored into said telephone directory font storage area.

19. A displaying information management method for a portable terminal according to claim 17 or 18, further comprising a step of urging the user to select an unnecessary font when said telephone directory font storage area has no free storage capacity any more, and a step of writing information of a font to be used newly into an area of said telephone directory font storage area for the unnecessary font designated with an unnecessary font selection instruction by the user.
